# EUROPEAN PATENT SPECIFICATION

(11) **EP 3 190 503 B1**
(45) Date of publication and mention of the grant of the patent: **24.07.2019**
(21) Application number: 16150683.7
(22) Date of filing: 08.01.2016
(51) Int. Cl.: G06F 3/0481, G06F 3/01

(54) **AN APPARATUS AND ASSOCIATED METHODS**
VORRICHTUNG UND ENTSPRECHENDE VERFAHREN
APPAREIL ET PROCÉDÉS ASSOCIÉS

(43) Date of publication of application: 12.07.2017
(73) Proprietor: Nokia Technologies Oy, 02610 Espoo (FI)
(72) Inventor: Cricri, Francesco, 33200 Tampere (FI); Lehtiniemi, Arto Juhani, 33880 Lempäälä (FI); Eronen, Antti Johannes, 33820 Tampere (FI); Leppänen, Jussi Artturi, 33580 Tampere (FI)
(74) Representative: Potter Clarkson

(56) References cited:
- US-A1- 2009 254 843
- US-A1- 2013 141 428
- Gernot Schaufler ET AL: "Sewing Worlds Together With SEAMS: A Mechanism To Construct Large-Scale Virtual Environments", , 1 August 1999 (1999-08-01), XP055055781, Retrieved from the Internet: URL:http://citeseerx.ist.psu.edu/viewdoc/d ownload;jsessionid=E8E4FC72EEF5ECAE338061F B82735273?doi=10.1.1.35.5479&rep=rep1&type =pdf [retrieved on 2013-03-07]
- Anonymous: "Uru: Ages Beyond Myst - Wikipedia, the free encyclopedia", , 12 December 2015 (2015-12-12), XP055272417, Retrieved from the Internet: URL:https://en.wikipedia.org/w/index.php?t itle=Uru:_Ages_Beyond_Myst&oldid=694897529 [retrieved on 2016-05-12]
- Dilandau3000: "Let's Play Uru Live - part 2 - One, two, KI", YouTube, 1 October 2010 (2010-10-01), pages 1-2, XP054976526, Retrieved from the Internet: URL:https://www.youtube.com/watch?v=hGbwN4 2ezyY [retrieved on 2016-05-13]

## Description

### Technical Field

The present disclosure relates to the field of virtual reality and, in particular, to the control of content presented by a virtual reality apparatus. Associated methods, computer programs and apparatus is also disclosed. Certain disclosed aspects/examples relate to portable electronic devices, in particular, virtual reality apparatus and virtual reality headsets/glasses.

### Background

Virtual reality may use a headset, such as glasses or goggles, or one or more displays that surround a user to provide the user with an immersive virtual experience. A virtual reality apparatus may present multimedia content representative of a virtual reality space to a user to simulate the user being present within the virtual reality space. The virtual reality space may be provided by a panoramic video, such as a video having a wide or 360° field of view (which may include above and/or below a horizontally oriented field of view). Gernot Schaufler et al: "Sewing Worlds Together With SEAMS: A Mechanism To Construct Large-Scale Virtual Environments", 1 August 1999 discloses the use of SEAM that may be defined as a door into another world. US 2013/141428 discloses a method for modelling a 3D interactive environment. US 2009/254843 discloses a shared virtual area communication environment. The video game "Uru: Ages Beyond Myst", disclosed by Wikipedia entry https://en.wikipedia.org/w/index.php?title=Uru:_Ages_Beyond_Myst&oldid=694897529 and YouTube video https://www.youtube.com/watch?v=hGbwN42ezyY, discloses a virtual reality world composed by a set of virtual reality spaces and allow one of the users to move between those spaces using "linking books", virtual objects present in the virtual space, connecting one virtual space to another.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

In a first example aspect there is provided an apparatus comprising:
at least one processor; and
at least one memory including computer program code,
the at least one memory and the computer program code configured to, with the at least one processor, cause the apparatus to perform at least the following:
   in respect of a first virtual reality space and a second, different, virtual reality space wherein at least one user-activatable link is provided in the first virtual reality space to enable a user to transition from being presented with the first virtual reality space to being presented with the second virtual reality space in their virtual reality view, when a first user has activated said user-activatable link to transition to being presented with the second virtual reality space, provide for display of a virtual reality guide-graphic to a second user in their virtual reality view of the first virtual reality space, the virtual reality guide-graphic comprising an image associated with said user-activatable link thereby showing, to the second user, a virtual path taken by the first user between the first and second virtual reality spaces, wherein the guide-graphic identifies the first user as having activated said user-activatable link by presentation of one or more of text, a predetermined name, a username, a picture of the first user, a colour and a shape associated with the first user to identify them to the second user, wherein the virtual reality guide-graphic is associated with the user-activatable link by one or more of;
   its virtual location in the first virtual reality space being positioned at substantially the same point as the activated user-activatable link;
   its virtual location in the first virtual reality space being positioned at substantially the same point the first user activated said user-activatable link.

The provision of a guide-graphic may be advantageous in providing an interactive and collaborative virtual reality environment in which virtual reality users can interact by virtue of being able to see how different users have transitioned between linked virtual reality spaces. Thus, the virtual reality spaces may each be viewed by multiple different users, at the same time or different times. The provision of the display of the guide-graphic to the second user in their view of the first virtual reality space to show the virtual path taken by a different user is advantageous and allows for interaction between different users exploring the virtual reality spaces.

The display of the guide-graphic may thus be dependent on the virtual reality view of the second user being towards the activated user-activatable link or the point the first user activated said user-activatable link.

In one or more examples, the virtual reality guide-graphic is associated with the user-activatable link by comprising one or more of;
an icon indicative of said user-activatable link or second virtual reality space;
text indicative of said user-activatable link or second virtual reality space;
an image of at least part of the second virtual reality space; or
a window in the virtual reality view of the first virtual reality space, the view provided through the window comprising an image of at least part of the second virtual reality space.

In one or more examples, the virtual reality guide-graphic comprises an image of one or more of;
a cylindrical projection of at least part of the second virtual reality space;
a spherical projection of at least part of the second virtual reality space;
a representation of the virtual reality space as viewed from a current location of the first user in the second virtual reality space;
a representation of the second virtual reality space as viewed at a current time in the second virtual reality space;
a panorama of at least part of the second virtual reality space;
at least a 180° panorama of the second virtual reality space; and
a substantially 360° panorama of the second virtual reality space.

In one or more examples, the virtual reality guide-graphic comprises a moving image configured to show different parts of the second virtual reality space over time.

In one or more examples, the provision of the guide-graphic is dependent on the first user and the second user, at least initially, simultaneously viewing the same virtual reality space in their respective virtual reality views. In some examples, the virtual path taken by the first user is recorded and presented to the second user at a later time when the second user views the same virtual reality space that was previously viewed by the first user.

In one or more examples, the display of the guide-graphic to the second user is removed should the first user return to viewing the first virtual reality space. Thus, the display of the guide-graphic may be actively updated based on which virtual reality space is viewed is currently being viewed by the first user.

In one or more examples, the provision of the guide-graphic is dependent on the first user and second user each viewing either of the first virtual reality space or second virtual reality space at the same time.

In some examples, the apparatus may be configured to provide a pointer indicator based on the VR view of the user, the pointer indicator configured to direct the (second) user's VR view in the virtual direction of the guide-graphic thereby enabling the second user to locate the guide-graphic in the virtual reality space.

In some examples, the apparatus provides for display of a virtual reality pointer-graphic, located at a spaced virtual position from the guide-graphic in the first reality space, and pointing towards the guide-graphic to guide the second user to the guide-graphic in their virtual reality view. While in this example the pointer indicator comprises a pointer-graphic, in some examples the pointer indicator may comprise a sound, smell or touch stimulus configured to direct the virtual reality view of the second user towards the guide-graphic.

In some examples, the guide-graphic is only displayed to the second user (or other user not comprising the first user) and is thus representative of the actions of different users. Thus, the first user may not be presented with an image representative of their activation of the user-activatable link they used to transition to the second virtual reality space.

In one or more examples, the apparatus provides for display of a second virtual reality guide-graphic to the first user, the second virtual reality guide-graphic comprising an image representative of the or another user-activatable link activated by the second user. In some examples, the second virtual reality guide-graphic may identify the second user as having activated said link.

In one or more examples, the apparatus is configured to, based on a third virtual reality space wherein at least one second user-activatable link is provided in the second virtual reality space to enable a user to transition from being presented with the second virtual reality space to being presented with the third virtual reality space in their virtual reality view, the first user having activated said second user-activatable link;
provide for display of the virtual reality guide-graphic only in the first virtual reality space; and provide for display of a third virtual reality guide-graphic only in the second virtual reality space to the second user in their view of the first and second virtual reality spaces respectively,
the second virtual reality guide graphic comprising an image representative of the second user-activatable link, said guide-graphic and said third virtual reality guide-graphic thereby providing a virtual path through the first, second and third virtual reality spaces to the virtual reality space currently viewed by the first user.

In one or more examples, the one or more guide graphics are user-activatable such that on activation of the respective guide-graphic, the second user (or first user) activating the guide-graphic follows the first user (the other user) into the virtual reality space that the guide-graphic represents by being presented themselves with said virtual reality space in their virtual reality view.

In one or more examples, the user-activatable link is activated by one or more of;
a gesture;
a voice command; and
a sight command.

The user-activatable links may provide for linking between virtual reality spaces at a time common to both virtual reality spaces. Thus, the user-activatable link may not only link to a spatial destination (i.e. the virtual reality space) it also links to a temporal position in that space.

In a further aspect there is provided a method, the method comprising;
in respect of a first virtual reality space and a second, different, virtual reality space wherein at least one user-activatable link is provided in the first virtual reality space to enable a user to transition from being presented with the first virtual reality space to being presented with the second virtual reality space in their virtual reality view, when a first user has activated said user-activatable link to transition to being presented with the second virtual reality space, providing for display of a virtual reality guide-graphic to a second user in their virtual reality view of the first virtual reality space, the virtual reality guide-graphic comprising an image associated with said user-activatable link thereby showing, to the second user, a virtual path taken by the first user between the first and second virtual reality spaces, wherein the guide-graphic identifies the first user as having activated said user-activatable link by presentation of one or more of text, a predetermined name, a username, a picture of the first user, a colour and a shape associated with the first user to identify them to the second user, wherein the virtual reality guide-graphic (408, 700) is associated with the user-activatable link (307) by one or more of;
its virtual location in the first virtual reality space being positioned at substantially the same point as the activated user-activatable link;
its virtual location in the first virtual reality space being positioned at substantially the same point the first user activated said user-activatable link.

In a further aspect there is provided a computer readable medium comprising computer program code stored thereon, the computer readable medium and computer program code being configured to, when run on at least one processor, perform at least the following:
in respect of a first virtual reality space and a second, different, virtual reality space wherein at least one user-activatable link is provided in the first virtual reality space to enable a user to transition from being presented with the first virtual reality space to being presented with the second virtual reality space in their virtual reality view, when a first user has activated said user-activatable link to transition to being presented with the second virtual reality space provide for display of a virtual reality guide-graphic to a second user in their virtual reality view of the first virtual reality space, the virtual reality guide-graphic comprising an image associated with said user-activatable link thereby showing, to the second user, a virtual path taken by the first user between the first and second virtual reality spaces, wherein the guide-graphic identifies the first user as having activated said user-activatable link by presentation of one or more of text, a predetermined name, a username, a picture of the first user, a colour and a shape associated with the first user to identify them to the second user, wherein the virtual reality guide-graphic (408, 700) is associated with the user-activatable link (307) by one or more of;
its virtual location in the first virtual reality space being positioned at substantially the same point as the activated user-activatable link;
its virtual location in the first virtual reality space being positioned at substantially the same point the first user activated said user-activatable link.

The present disclosure includes one or more corresponding aspects, examples or features in isolation or in various combinations whether or not specifically stated (including claimed) in that combination or in isolation. Corresponding means and corresponding functional units (e.g., function enabler, guide-graphic creator, virtual reality display renderer, user input receiver) for performing one or more of the discussed functions are also within the present disclosure.

Corresponding computer programs for implementing one or more of the methods disclosed are also within the present disclosure and encompassed by one or more of the described examples.

The above summary is intended to be merely exemplary and non-limiting.

### Brief Description of the Figures

A description is now given, by way of example only, with reference to the accompanying drawings, in which:
figure 1 illustrates an example apparatus embodiment as part of a system comprising a number of electronic components, including a virtual reality apparatus, content storage, a first virtual reality headset and a second virtual reality headset, according to one embodiment of the present disclosure;
figure 2 illustrates an example of first, second and third virtual reality spaces captured by virtual reality content capture devices;
figure 3 illustrates an example of a schematic view showing two different virtual reality users viewing a first virtual reality space;
figure 4 illustrates an example of a schematic view showing a first user having activated a user-activatable link to transition to being presented with a view of a second virtual reality space;
figure 5 illustrates an example virtual reality view of the first virtual reality space;
figure 6 illustrates the example virtual reality view of figure 5 with an example guide-graphic that also provides a user-activatable link to the second virtual reality space;
figure 7 illustrates an example virtual reality view of the first virtual reality space showing a further example guide-graphic;
figure 8 illustrates an example of how a panorama of a virtual reality space may be created;
figure 9 illustrates an example of a panorama of the virtual reality space;
figure 10 illustrates an example of a virtual path followed by a user between virtual reality spaces;
figure 11 illustrates a flowchart according to a method of the present disclosure; and
figure 12 illustrates schematically a computer readable medium providing a program.

### Description of Example Aspects

Virtual reality (VR) may use a headset, such as glasses or goggles, or one or more displays that surround a user to provide a user with an immersive virtual experience. A virtual reality apparatus may present multimedia content representative of a virtual reality space or world to a user to simulate the user being present within the virtual reality space. The virtual reality space may replicate a real world environment to simulate the user being physically present at a real world location or the virtual reality space may be computer generated or a combination of computer generated and real world multimedia content. The virtual reality space may be provided by a panoramic video, such as a video having a wide or 360° field of view (which may include above and/or below a horizontally oriented field of view). The virtual reality apparatus may provide for the user to explore, such as by virtually moving around, the virtual reality space and may provide for user interaction with virtual objects in the virtual reality space. Thus, the content provided to the user may be artificial or imaginary and created in a computer or may comprise live or recorded images of the real world, captured by a virtual reality content capture device such as a panoramic video capture device or telepresence device, for example. One example of a virtual reality content capture device is a Nokia OZO camera. The virtual reality space may provide for a 360° or more field of view and may provide for panning around said field of view based on movement of the VR user's head or eyes. The virtual reality view of a virtual reality space may be provided to said user by virtual reality apparatus via displays in the headset.

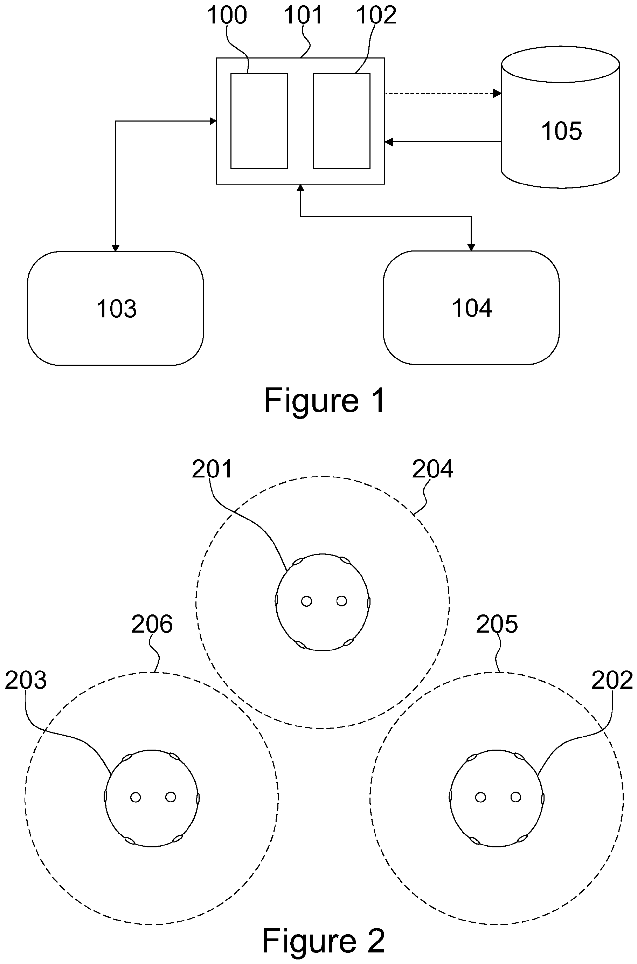

Figure 1 shows an apparatus 100 configured to provide for display of a guide-graphic to a user based on how a different user moves between virtual reality spaces thereby providing a virtual path that a user may follow in order to experience the same content as the different user. In this example, the apparatus 100 is functionally provided by a computer server 101, which may comprise a memory and a processor. The server 101, in this example, provides at least part of the functionality of a virtual reality apparatus 102 in combination with first virtual reality (VR) headset 103 for use by a first user and second VR headset 104 for use by a second user. The virtual reality apparatus may provide for more or less users (with corresponding VR headsets). The apparatus may provide the virtual reality spaces formed from virtual reality content from a virtual reality content store 105. In some examples, the apparatus 100 may be separate from the virtual reality apparatus 102 and have a communication link thereto. Further, a virtual reality view for a first user and a virtual reality view for a second user may be provided by a different virtual reality apparatuses, which may be in communication with one another, such as via the apparatus 100.

Thus, in this example, one apparatus, the server 101, provides the functionality of the virtual reality (VR) apparatus for two or more separate users and the apparatus 100 for providing for display of the guide-graphic. In general, it will be appreciated these apparatuses 100, 102 may be physically separate and/or grouped together differently.

In this embodiment the server 101 or each apparatus 100, 102 mentioned above may have only one processor and one memory but it will be appreciated that other embodiments may utilise more than one processor and/or more than one memory (e.g. same or different processor/memory types). Further, the apparatus(es) 100, 102 may be an Application Specific Integrated Circuit (ASIC).

The processor may be a general purpose processor dedicated to executing/processing information received from other components, such as content store 105 and user input (such as via VR headsets 103, 104) in accordance with instructions stored in the form of computer program code on the memory. The output signalling generated by such operations of the processor is provided onwards to further components, such as 102, 103 and 104.

The memory (not necessarily a single memory unit) is a computer readable medium (solid state memory in this example, but may be other types of memory such as a hard drive, ROM, RAM, Flash or the like) that stores computer program code. This computer program code stores instructions that are executable by the processor, when the program code is run on the processor. The internal connections between the memory and the processor can be understood to, in one or more example embodiments, provide an active coupling between the processor and the memory to allow the processor to access the computer program code stored on the memory.

In this example the processor and memory are all electrically connected to one another internally to allow for electrical communication between the respective components. In this example the components are all located proximate to one another so as to be formed together as an ASIC, in other words, so as to be integrated together as a single chip/circuit that can be installed into an electronic device. In some examples one or more or all of the components may be located separately from one another.

Accordingly, the apparatus 100 may receive signalling from the VR apparatus 102 representative of a first user's activation of virtual user-activatable links that provide for transition between virtual reality spaces that are presented to the first user by the apparatus 102 and VR glasses 103. The apparatus 100 may, based on the signalling, render a guide-graphic for display to a second user, such as a user of VR glasses 104. The apparatus 100 may provide signalling to the virtual reality apparatus 102 to provide for display of the guide-graphic to the second user.

Figure 2 shows an example of the capture of virtual reality content. In this example, three virtual reality content capture devices 201, 202, 203, such as Nokia OZO cameras, are used to capture virtual reality content of the real world. The content captured by each camera may form a virtual reality space, shown diagrammatically as dashed lines 204, 205, 206. It will be appreciated that a virtual reality space may be formed from amalgamated content of multiple virtual reality content capture devices such that said space is explorable as if present at the location of the VR content capture devices. However, in some examples, a user may view the virtual reality space and pan around it but may not be able to explore (or translate around) the virtual reality space as the translational position of virtual reality content is dependent on the position of the VR content capture device.

The VR content capture devices 201, 202, 203 may capture content at geographically near or disparate locations. The content may be used to provide a plurality (three in this example) of virtual reality spaces for presentation to users in their respective virtual reality views. So that the resulting virtual reality spaces are interactive, user-activatable links may be provided in the virtual reality spaces to enable navigation between virtual reality spaces. Thus, in some examples, a user-activatable link may comprise a graphic overlay so as to enable transitioning between virtual reality spaces. In some examples, the user-activatable links are not displayed but present at virtual locations in the virtual reality space. A user viewing the first virtual reality space may activate the link in order to cause the VR apparatus 102 to stop displaying the first virtual reality space to them and provide for display of the second virtual reality space. In some examples, the user-activatable links are associated with objects visible in the virtual reality space.

Thus, an object captured by the first VR content capture device 201 (for presentation as part of a first virtual reality space) may be visible, albeit from a different angle perhaps, in content captured by the second VR content capture device 202 (for presentation as part of a second virtual reality space). A user-activatable link may be associated with one or more objects common to the virtual reality spaces for use in transitioning therebetween in the VR view. For example, a virtual reality space of a beach may show a beach house some distance along the shore. A virtual reality space generated from VR content captured within the beach house may be available for viewing. Accordingly, a user-activatable link may be provided in the "beach" virtual reality space so that a user interested by the beach house may select the "beach house" virtual reality space for viewing. Such an example may be provided by image analysis of VR content from different sources to identify common features and/or by examination of geo-tags of the VR content and/or by manually entered links between VR content entered by a content producer or a third party. In general however the virtual reality spaces provided for VR viewing may include links, activatable in virtual reality by a user viewing the virtual reality space, such that a different virtual reality space may be presented to them.

It will be appreciated that provision of one or perhaps a plurality of user-activatable links in one or more virtual reality spaces may provide for an explorable network of virtual reality spaces. A path that one user takes through the network of virtual reality spaces may interesting to another user. In some examples, one user (using headset 103) may act as a guide, such as a tour guide explaining what can be seen in the virtual reality space to one or more other users, who view the same virtual reality space with their own virtual reality headset 104. The viewing of the same virtual reality space may occur at the same time or at different times. For example, the example tour guide's explanation may be provided live or generated from a recording respectively. The guide (or more generally a first user) may transition between virtual reality spaces using user-activatable links, such as part of their tour. The apparatus 100 provides for display of a guide-graphic that may allow for the other users (tourists for example) to follow the "guide" user between virtual reality spaces. It will be appreciated that while the above example describes a tour guide and tourists as the VR users, the apparatus 100 has wider application and may effectively provide for the display of a virtual path (by way of one or more guide-graphics) taken by a first user between the first and second virtual reality spaces such that a second user is informed of the virtual path the first user took.

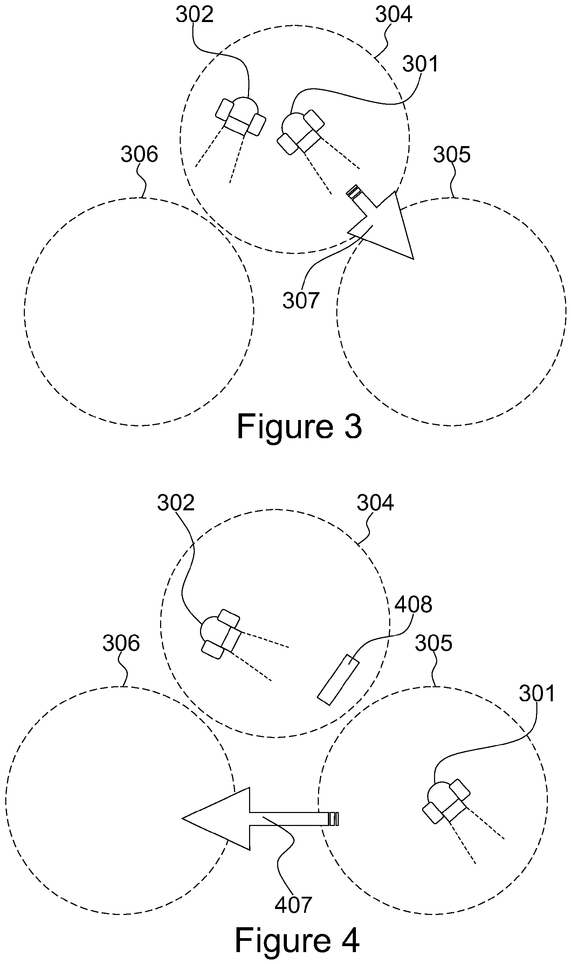

Figure 3 shows, schematically, a first virtual reality space 304, a second virtual reality space 305 and a third virtual reality space 306. A first user 301 and a second user 302 of the VR apparatus 102 (using different VR headsets) are shown viewing the first virtual reality space 304 (by virtue of being located within the dashed circle representative of the first virtual reality space). In this example, the first user 301 and the second user 302 are shown, at least initially, viewing the same virtual reality space at the same time. The first user 301 has identified a user activatable link 307 (represented by arrow). The user activatable link 307 is virtually activatable in the VR view of the first user (and any other users). The user activatable link 307 is associated with a different virtual reality space, namely the second virtual reality space 305 and provides a link thereto. Thus, on activation of the user-activatable link 307 by the first user 301, the VR apparatus 102 may provide for a change of the virtual reality space presented to them from the first virtual reality space 304 to the second virtual reality space 305. Activation of the user-activatable link may be provided by any suitable user input, such as via a user input device, a gesture, a voice command, and/or a sight command (e.g. using where the user looks in the VR view as an input, perhaps by staring for a predetermined time).

Figure 4 shows the first user 301 having activated the user-activatable link 307 and is now presented with the second virtual reality space 305, shown by the first user being located with the dashed circle of the second virtual reality space. The second user 302 remains viewing the first virtual reality space 304. However, the apparatus 100 provides for display of a virtual reality guide-graphic 408 to the second user 302 in their view of the first virtual reality space 304, the virtual reality guide-graphic 408 comprising an image representative of said user-activatable link 307, which may identifying the first user 301 as having activated said link 307, thereby showing, to the second user 302, a virtual path taken by the first user 301 between the first and second virtual reality spaces 304, 305.

The guide-graphic 408 may be presented to the second user 302 in their VR view at a virtual location in the first virtual reality space 304 corresponding to the user-activatable link 307 activated by the first user. In some examples, the user-activatable link 307 may be activatable at a virtual distance therefrom, such as by a sight command focussed some way in the distance not directly ahead. Accordingly, the virtual location in the first virtual reality space of the guide-graphic 408 may correspond to the point the first user activated said user-activatable link 307. Thus, it will be appreciated that the display of the guide-graphic in the VR view of the second user may be dependent on the second user looking in the virtual direction of the user-activatable link or towards the point the first user activated said link, in their VR view.

The user-activatable link 307 may be presented as an icon or overlay to a user in their VR view. In some examples, there is no visible indication presented in the VR view that the user-activatable link is available. Thus, the VR apparatus may be configured to provide the transition between VR spaces or display the "invisible" link on determination that the first user may wish to view the linked virtual reality space.

The guide-graphic 408 may comprise an icon. The guide-graphic 408 may identify the first user 301 to the second user 302 and thereby indicate that the first user 301 has transitioned to the second virtual reality space by virtue of the user-activatable link 307. The guide-graphic may comprise an image of the second virtual reality space.

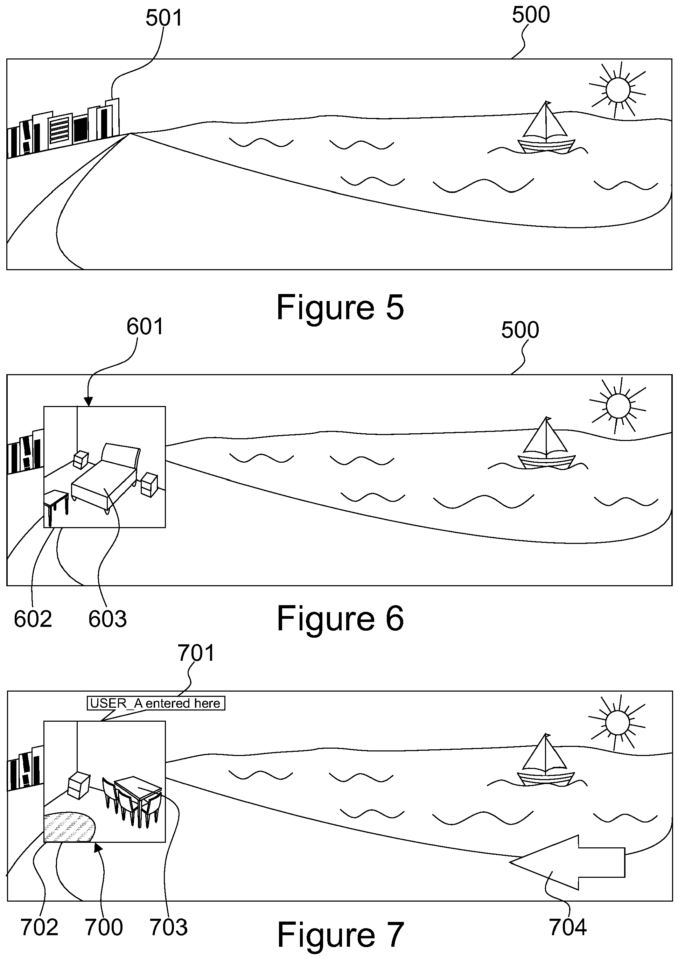

Figure 5 shows a virtual reality space 500 represented as a panorama. It will be appreciated that the VR view (i.e. what is visible on the display(s) of the VR headset) of the virtual reality space 500 at any one time may be smaller than the panorama shown. The VR view may be three dimensional, such as stereoscopic VR view in this and any other example. A beach scene is shown with beach houses and hotels shown on the left-hand side and the sea on the right-hand side. This scene may be presented as the first virtual reality space 304 to the first and second users 301, 302 shown in figure 3.

The virtual reality space 500 includes a user-activatable link 501. The link 501 may or may not be evident in the virtual reality space. However, the first user may, by suitable user input, activate the user-activatable link to "move" to the second virtual reality space. In this example, the user-activatable link 501 is not highlighted in the virtual reality space but a "staring" sight command may be used to determine when then the first user activates the link 501. Thus, a user interested in the beach house located at the position of the link 501 may stare at the beach house and the apparatus may present them with a different virtual reality space of the beach house recorded from the beach house. Thus, the apparatus 102 provides for the first user's VR view to change from that of the first virtual reality space to that of a second virtual reality space.

Figure 6 shows a further example of the same virtual reality space 500 in which the user-activatable link is shown as a picture-in-picture preview of the second virtual reality space. The user activatable link 601 comprises a window 602 within which is displayed a view 603 of the second (i.e. linked) virtual reality space. The term "linked virtual reality space" refers to the virtual reality space that the user-activatable link will take a user to on activation. The view of the linked virtual reality space thus comprises an image of part of the second virtual reality space.

Figure 6 may also illustrate the form of a guide-graphic 601. Thus, in examples where the user-activatable links are not visible or displayed differently, the picture-in-picture preview of the second virtual reality space 601 may comprise the guide-graphic. The guide-graphic 601 may thus shows a view of the virtual reality space that the first user has moved to in a windowed manner.

It will be appreciated that the user-activatable link(s) and the guide-graphic(s) may be presented to the user in many different forms, but it is advantageous that the user-activatable link(s) and guide-graphic(s) are presented differently to a user in their VR view such that the user can discern between them.

Figure 7 shows a further example guide-graphic 700 (such as guide-graphic 408) comprising an image 703 of at least part of the linked virtual reality space that the first user 301 moved to (in window 702) and identification text 701 identifying that the first user "USER_A" has "entered here", that is transitioned to the linked, second virtual reality space at this virtual location point in the first virtual reality space. Thus, the guide-graphic includes identifying text of the username of the first user 301. In some examples a predetermined name or avatar associated with the first user may be used as part of the guide-graphic 800 to identify the first user 301 to the second user 302. In some examples, an image of the linked virtual reality space is not provided as part of the guide-graphic. Thus, the guide-graphic may only provide for an identification of the first user, such as by way of text, a picture of the user, an avatar of the user or other identifying information. In some examples, the image of the linked virtual reality space may not be provided and instead an icon or a textual name for the linked virtual reality space may be provided as part of the guide-graphic.

The image of the linked (second) virtual reality space, whether shown within a window or without a surrounding window, or as part of the user-activatable link or the guide-graphic may comprise; a cylindrical projection of at least part of the second virtual reality space; a spherical projection of at least part of the second virtual reality space; a representation of the virtual reality space as viewed from a current location of the first user in the second virtual reality space; a representation of the second virtual reality space as viewed at a current time in the second virtual reality space; a panorama of at least part of the second virtual reality space; at least a 180° panorama of the second virtual reality space; or a substantially 360° panorama of the second virtual reality space. Thus, it will be appreciated that as virtual reality spaces are immersive virtual spaces, only a part of the space may be displayed to a user viewing a different virtual reality space. Accordingly, how the linked virtual reality space is displayed and what parts of it are shown can vary between examples. The above represents a non-exhaustive list of how the image of the linked virtual reality space may be presented.

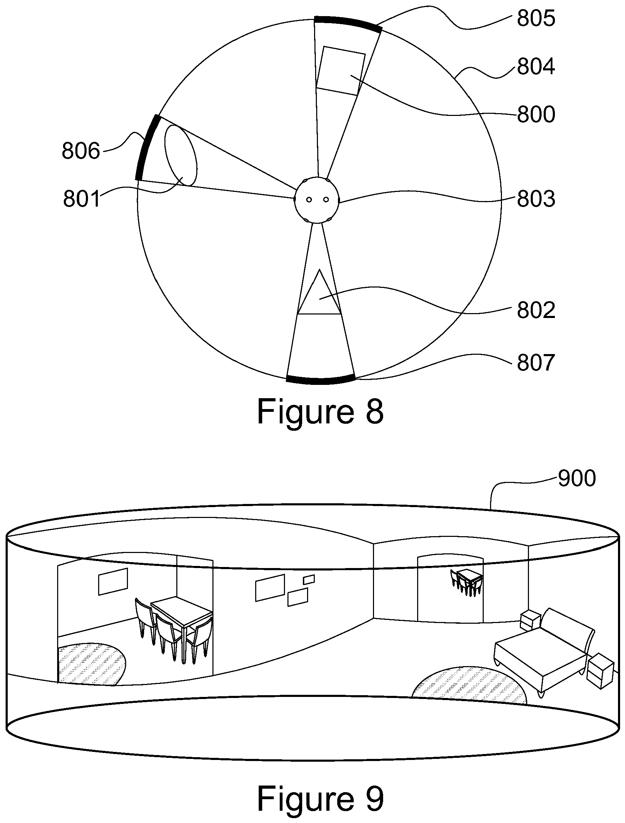

Figures 8 and 9 show how an image of a linked virtual reality space may be rendered. Figure 8 shows a plurality of objects 800, 801, 802 in the field of view of a VR capture device 803. An image of the three dimensional virtual reality space is created by projecting the images of the objects onto a cylindrical surface 804. Two dimensional projections 805, 806 and 807 are thereby formed on the surface 804. Thus, the three dimensional virtual reality space is converted to a cylindrical projection of said space, as shown in Figure 9. It will be appreciated that figure 9 does not show half of the projection 900 nearest the viewer for clarity. This two dimensional projection may be used as part of the guide-graphic and/or the user-activatable link. It will be appreciated that while a cylindrical projection is exemplified here, other projections may be used to convert the three dimensional virtual reality space into a two dimensional image.

Further, the image of the linked (second) virtual reality space may comprise a moving image configured to show different parts of the second virtual reality space over time. Thus, a projection of the linked virtual reality space may rotate, such as if the camera was panning around the virtual reality space. Alternatively, the moving image may comprise a plurality of still snapshots of the linked virtual reality space as a slideshow.

The guide-graphic 700 may be displayed in addition to any displayed user-activatable link 601 or may be displayed instead of any user-activatable link 601. Further, the one or more guide graphics 700 may be user-activatable by a user. Thus, the second user 302 may see the guide-graphic in their VR view of the first virtual reality space and activate the guide-graphic by way of any suitable user input (example user inputs are listed above). On user-activation of the guide-graphic 700, the second user 302 may "follow" the first user 301, who may be identified in the guide-graphic, into the second virtual reality space 305. Accordingly, the second user 302 will be presented with the second virtual reality space in their virtual reality view.

In examples where the first user and second user are using the VR apparatus simultaneously, the provision of the display of the guide graphic may be dependent on the current virtual reality space (i.e. first, second or third) viewed by the first user. For example, in the example of Figure 7, the guide-graphic 700 is displayed because the first user 301 is currently viewing the second virtual reality space and the second user 302 can see who transitioned between VR spaces and where they went (i.e. to the second VR space). However, if the first user 301 were to return to viewing the same (i.e. first) virtual reality space as the second user 302, then the apparatus may be configured to stop displaying the guide-graphic. Accordingly, rather than the guide-graphic showing the complete path that the first user has taken, the apparatus may be configured to show the current location of the first user 302 among a plurality of virtual reality spaces by way of one or more guide-graphics indicating the user-activatable links between the virtual reality spaces that the first user took such that the second user can follow the path taken by the first user in order to reach the same virtual reality space as currently viewed by the first user.

In some examples, the apparatus may be configured to provide a pointer indicator based on the VR view of the user, the pointer indicator configured to direct the user in the virtual direction of the guide-graphic thereby enabling the second user to locate the guide-graphic in the virtual reality space easily.

In some examples, the pointer indicator comprises a pointer-graphic provided for display to user(s) to inform them of the direction they need to look in the virtual reality space for the guide-graphic. Figure 7 shows an example pointer graphic 704 comprising an arrow pointing towards the guide graphic 700. This may be useful given that a user may only be able to see a small portion of the panorama (representing the virtual reality space) at any one time. Thus, the virtual reality pointer-graphic 704, located at a spaced virtual position from the guide-graphic in the first reality space, and pointing towards the guide-graphic 700, 408 to guide the second user 302 to the guide-graphic 700, 408 in their virtual reality view may be advantageous. The pointer graphic may be provided at a fixed virtual location in the virtual reality space, or it may be associated with the current VR view of the second user 302. If the pointer-graphic is associated with the current view, the second user is advantageously provided with feedback on the direction to look for the guide graphic 700, 408 no matter where they are looking in the VR space.

In some examples, the pointer-graphic comprises a virtual trail leading the user to the guide-graphic. The pointer-graphic may be presented part transparently.

In some examples, the pointer indicator comprises an audible pointer indicator, which may be presented by the VR headset. Thus, a directional sound may be provided to indicate the direction a user should look in their VR view to see the guide-graphic. In some examples, the pointer indicator may be a scent provided such that it is indicative of the direction a user must look in their VR view to see the guide-graphic. In some examples the pointer indicator may comprise a haptic pointer indicator where a physical touch or vibration, for example, may indicate the direction a user must look in their VR view to see the guide-graphic.

While the above describes the display of a guide graphic to a second user based on the actions of the first user in moving between virtual reality spaces, other guide-graphics may be provided for the first user. Thus, the apparatus 100 may provide for display of a second virtual reality guide-graphic (not shown) in the VR view of the first user to show them the virtual path to the virtual reality space currently viewed by the second user. The virtual path may or may not comprise the same path taken by the first user to arrive at their current VR space. Alternatively or in addition, the second guide-graphic may comprise an image representative of the or another user-activatable link 307, 601 activated by the second user 302 and optionally identifying the second user as having activated said link. Thus, a guide-graphic may be provided to the first user on activation of user-activatable links by the second user to show them the path between linked VR spaces taken by the second user. In some examples, further guide-graphics may be provided to the first user on activation of user-activatable links by the first user to show them the virtual path between linked VR spaces back to the second user. Thus, a first user may be able to easily return the way they came or via a different path, via the user-activatable links, to find the second user.

Returning to Figure 4, it can be seen that a second user-activatable link 407 is provided in the second virtual reality space 305 to enable the first user (or second user in their view of the second VR space) to transition from being presented with the second virtual reality space 305 to being presented with the third virtual reality space 306 in their virtual reality view.

Should the first user activate said second user-activatable link 407, the apparatus 100 may be configured to, in addition to providing for display of the virtual reality guide-graphic 408 only in the first virtual reality space 304, provide for display of a third virtual reality guide-graphic (not shown) only in the second virtual reality space 305 to the second user 302 in their view of the first and second virtual reality spaces respectively. As with the virtual reality guide graphic 408, the second virtual reality guide graphic (not shown) may comprise an image representative of the second user-activatable link 407 and may identify the first user 301 as having activated said link. Further, the guide-graphic 408 and said second virtual reality guide-graphic (not shown) thereby provide a virtual path through the first, second and third virtual reality spaces 304, 305, 306 to the virtual reality space currently viewed by the first user 301.

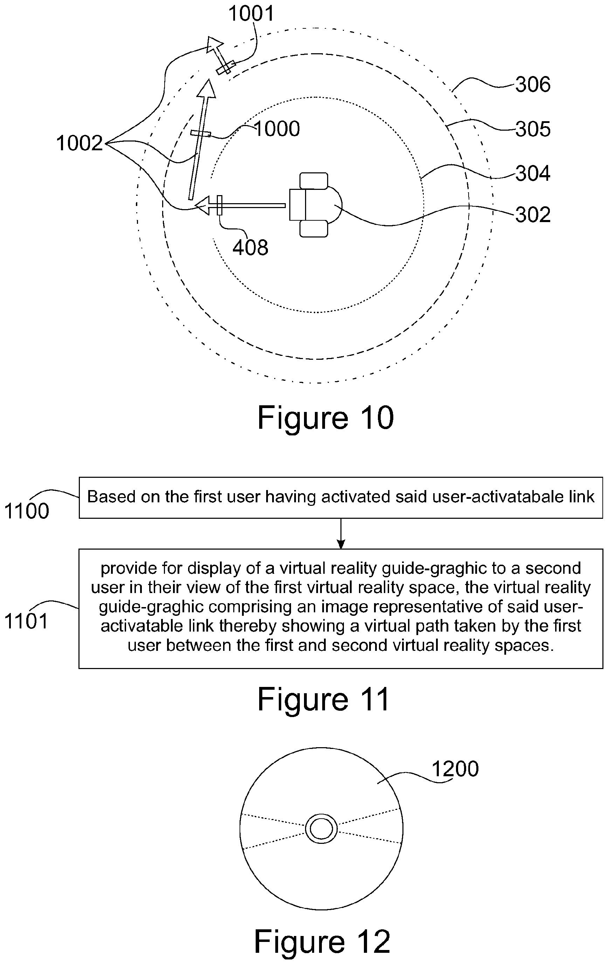

Figure 10 shows the first, second and third virtual reality spaces 304, 305, 306 diagrammatically as a plurality of nested circles. The guide graphic 408 and second guide graphic (shown as 1000) and a third guide graphic 1001 in the third virtual reality space 306 define a virtual path 1002 through the linked spaces followed by the first user 302 (or, more generally any other user). In some examples, the apparatus is configured to provide for display, to the second user in their VR view, a diagrammatic plan view of at least two virtual reality spaces that the first user has moved between by virtue of the user-activatable links. The diagrammatic plan view may be viewed by the second user in response to a selection second user input to view the plan view.

Figure 11 shows a flow diagram illustrating the steps of based on 1100 a first virtual reality space and a second, different, virtual reality space wherein at least one user-activatable link is provided in the first virtual reality space to enable a user to transition from being presented with the first virtual reality space to being presented with the second virtual reality space in their virtual reality view, the first user having activated said user-activatable link, providing for 1101 display of a virtual reality guide-graphic to a second user in their view of the first virtual reality space, the virtual reality guide-graphic comprising an image representative of said user-activatable link thereby showing a virtual path taken by the first user between the first and second virtual reality spaces.

Figure 12 illustrates schematically a computer/processor readable medium 1200 providing a program according to an example. In this example, the computer/processor readable medium is a disc such as a digital versatile disc (DVD) or a compact disc (CD). In some examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

User inputs may be gestures which comprise one or more of a tap, a swipe, a slide, a press, a hold, a rotate gesture, a static hover gesture proximal to the user interface of the device, a moving hover gesture proximal to the device, bending at least part of the device, squeezing at least part of the device, a multi-finger gesture, tilting the device, or flipping a control device. Further the gestures may be any free space user gesture using the user's body, such as their arms, or a stylus or other element suitable for performing free space user gestures.

The apparatus shown in the above examples may be a portable electronic device, a laptop computer, a mobile phone, a Smartphone, a tablet computer, a personal digital assistant, a digital camera, a smartwatch, smart eyewear, a pen based computer, a non-portable electronic device, a desktop computer, a monitor, a household appliance, a smart TV, a server, a wearable apparatus, a virtual reality apparatus, or a module/circuitry for one or more of the same.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice.

## Claims

1. An apparatus comprising:
at least one processor; and
at least one memory including computer program code,
the at least one memory and the computer program code configured to, with the at least one processor, cause the apparatus to perform at least the following:
in respect of a first virtual reality space (304) and a second, different, virtual reality space (305) wherein at least one user-activatable link (307) is provided in the first virtual reality space to enable a user to transition from being presented with the first virtual reality space (304) to being presented with the second virtual reality space (305) in their virtual reality view, when a first user (301) has activated said user-activatable link to transition to being presented with the second virtual reality space (305), provide for display of a virtual reality guide-graphic (408, 700) to a second user (302) in their virtual reality view of the first virtual reality space (304), the virtual reality guide-graphic comprising an image associated with said user-activatable link thereby showing, to the second user, a virtual path taken by the first user (301) between the first and second virtual reality spaces, wherein the guide-graphic identifies the first user as having activated said user-activatable link by presentation of one or more of text, a predetermined name, a username, a picture of the first user, a colour and a shape associated with the first user to identify (701) them to the second user; and
wherein the virtual reality guide-graphic (408, 700) is associated with the user-activatable link (307) by one or more of;
its virtual location in the first virtual reality space being positioned at substantially the same point as the activated user-activatable link;
its virtual location in the first virtual reality space being positioned at substantially the same point the first user activated said user-activatable link.

2. The apparatus of claim 1, wherein the virtual reality guide-graphic (408, 700) is associated with the user-activatable link by comprising one or more of;
an icon indicative of said user-activatable link or second virtual reality space;
text indicative of said user-activatable link or second virtual reality space;
an image of at least part of the second virtual reality space; or
a window in the virtual reality view of the first virtual reality space, the view provided through the window comprising an image of at least part of the second virtual reality space.

3. The apparatus of any preceding claim, wherein the virtual reality guide-graphic comprises an image of one or more of;
a cylindrical projection of at least part of the second virtual reality space;
a spherical projection of at least part of the second virtual reality space;
a representation of the virtual reality space as viewed from a current location of the first user in the second virtual reality space;
a representation of the second virtual reality space as viewed at a current time in the second virtual reality space;
a panorama of at least part of the second virtual reality space;
at least a 180° panorama of the second virtual reality space; and
a substantially 360° panorama of the second virtual reality space.

4. The apparatus of any preceding claim, wherein the virtual reality guide-graphic (408, 700) comprises a moving image configured to show different parts of the second virtual reality space over time.

5. The apparatus of any preceding claim, wherein a pointer indicator (704) is provided based on the virtual reality view of the second user, the pointer indicator configured to direct the second user in the virtual direction of the guide-graphic thereby enabling the second user to locate the guide-graphic in the virtual reality space.

6. The apparatus of any preceding claim, wherein a virtual reality pointer-graphic (704) is provided for display, the pointer-graphic located at a spaced virtual position from the guide-graphic in the first virtual reality space, and pointing towards the guide-graphic to guide the second user to the guide-graphic in their virtual reality view.

7. The apparatus of any preceding claim, wherein provision of the guide-graphic is dependent on the first user (301) and the second user (302), at least initially, simultaneously viewing the same virtual reality space in their respective virtual reality views.

8. The apparatus of any preceding claim, wherein display of the guide-graphic (408, 700) to the second user is removed should the first user return to viewing the first virtual reality space.

9. The apparatus of any preceding claim, wherein provision of the guide-graphic (408, 700) is dependent on the first user and second user each viewing either of the first virtual reality space or second virtual reality space at the same time.

10. The apparatus of any preceding claim, wherein the apparatus provides for display of a second virtual reality guide-graphic to the first user, the second virtual reality guide-graphic comprising an image representative of the or another user-activatable link activated by the second user.

11. The apparatus of any preceding claim, wherein based on a third virtual reality space (306) wherein at least one second user-activatable link (407) is provided in the second virtual reality space (305) to enable a user to transition from being presented with the second virtual reality space (305) to being presented with the third virtual reality space (306) in their virtual reality view, the first user having activated said second user-activatable link;
provide for display of the virtual reality guide-graphic only in the first virtual reality space; and provide for display of a third virtual reality guide-graphic only in the second virtual reality space to the second user in their view of the first and second virtual reality spaces respectively,
the second virtual reality guide graphic comprising an image representative of the second user-activatable link, said guide-graphic and said third virtual reality guide-graphic thereby providing a virtual path through the first, second and third virtual reality spaces to the virtual reality space currently viewed by the first user.

12. The apparatus of any preceding claim, wherein the one or more guide graphics are user-activatable such that on activation of the respective guide-graphic, the first or second user activating the guide-graphic follows the other of the first and second user into the virtual reality space that the guide-graphic represents by being presented themselves with said virtual reality space in their virtual reality view.

13. A method, the method comprising
in respect of a first virtual reality space (304) and a second, different, virtual reality space (305) wherein at least one user-activatable link (307) is provided in the first virtual reality space to enable a user to transition from being presented with the first virtual reality space (304) to being presented with the second virtual reality space in their virtual reality view, when a first user (301) has activated said user-activatable link to transition to being presented with the second virtual reality space (305), providing for display of a virtual reality guide-graphic (408, 700) to a second user (302) in their virtual reality view of the first virtual reality space (304), the virtual reality guide-graphic comprising an image associated with said user-activatable link thereby showing, to the second user, a virtual path taken by the first user (301) between the first and second virtual reality spaces, wherein the guide-graphic identifies the first user as having activated said user-activatable link by presentation of one or more of text, a predetermined name, a username, a picture of the first user, a colour and a shape associated with the first user to identify (701) them to the second user, wherein the virtual reality guide-graphic (408, 700) is associated with the user-activatable link (307) by one or more of;
its virtual location in the first virtual reality space being positioned at substantially the same point as the activated user-activatable link;
its virtual location in the first virtual reality space being positioned at substantially the same point the first user activated said user-activatable link.

14. A computer readable medium comprising computer program code stored thereon, the computer readable medium and computer program code being configured to, when run on at least one processor, perform at least the following:
in respect of a first virtual reality space (304) and a second, different, virtual reality space (305) wherein at least one user-activatable link (307) is provided in the first virtual reality space (304) to enable a user to transition from being presented with the first virtual reality space to being presented with the second virtual reality space in their virtual reality view, when a first user (301) has activated said user-activatable link to transition to being presented with the second virtual reality space(305), provide for display of a virtual reality guide-graphic (408, 700) to a second user (302) in their virtual reality view of the first virtual reality space, the virtual reality guide-graphic comprising an image associated with said user-activatable link thereby showing, to the second user, a virtual path taken by the first user (301) between the first and second virtual reality spaces, wherein the guide-graphic identifies the first user as having activated said user-activatable link by presentation of one or more of text, a predetermined name, a username, a picture of the first user, a colour and a shape associated with the first user to identify (701) them to the second user, wherein the virtual reality guide-graphic (408, 700) is associated with the user-activatable link (307) by one or more of;
its virtual location in the first virtual reality space being positioned at substantially the same point as the activated user-activatable link;
its virtual location in the first virtual reality space being positioned at substantially the same point the first user activated said user-activatable link.

## Patentansprüche

1. Vorrichtung, die Folgendes umfasst:
mindestens einen Prozessor und
mindestens einen Speicher, der einen Computerprogrammcode beinhaltet,
wobei der mindestens eine Speicher und der Computerprogrammcode dazu ausgelegt sind, mit dem mindestens einen Prozessor zu bewirken, dass die Vorrichtung mindestens Folgendes durchführt:
mit Bezug auf einen ersten virtuellen Realitätsraum (304) und einen zweiten, anderen virtuellen Realitätsraum (305), wobei im ersten virtuellen Realitätsraum mindestens ein von einem Benutzer aktivierbarer Link (307) bereitgestellt ist, um es einem Benutzer zu ermöglichen, von der Präsentation des ersten virtuellen Realitätsraums (304) zur Präsentation des zweiten virtuellen Realitätsraums (305) in seiner virtuellen Realitätsansicht überzugehen, wenn ein erster Benutzer (301) den von einem Benutzer aktivierbaren Link aktiviert hat, um zur Präsentation des zweiten virtuellen Realitätsraums (305) überzugehen, Bereitstellen einer virtuellen Realitätsführungsgrafik (408, 700) zum Anzeigen für einen zweiten Benutzer (302) in seiner virtuellen Realitätsansicht des ersten virtuellen Realitätsraums (304), wobei die virtuelle Realitätsführungsgrafik ein Bild umfasst, das mit dem von einem Benutzer aktivierbaren Link verknüpft ist, wodurch dem zweiten Benutzer ein virtueller Pfad gezeigt wird, der vom ersten Benutzer (301) zwischen dem ersten und dem zweiten virtuellen Realitätsraum genommen wurde, wobei die Führungsgrafik mittels einer Präsentation von einem oder mehrerem von Text, einem vorbestimmten Namen, einem Benutzernamen, einem Abbild des ersten Benutzers, einer Farbe und einer Form, die mit dem ersten Benutzer verknüpft sind, um ihn für den zweiten Benutzer zu identifizieren (701), den ersten Benutzer als denjenigen identifiziert, der den von einem Benutzer aktivierbaren Link aktiviert hat; und
wobei die virtuelle Realitätsführungsgrafik (408, 700) mit dem von einem Benutzer aktivierbaren Link (307) durch eines oder mehreres von Folgendem verknüpft ist;
Positionierung ihres virtuellen Standorts im ersten virtuellen Realitätsraum an dem im Wesentlichen selben Punkt wie der aktivierte von einem Benutzer aktivierbare Link;
Positionierung ihres virtuellen Standorts im ersten virtuellen Realitätsraum an dem im Wesentlichen selben Punkt, an dem der erste Benutzer den von einem Benutzer aktivierbaren Link aktiviert hat.

2. Vorrichtung nach Anspruch 1, wobei die virtuelle Realitätsführungsgrafik (408, 700) mit dem von einem Benutzer aktivierbaren Link verknüpft ist, indem sie eines oder mehreres von Folgendem umfasst;
ein Symbol, das den von einem Benutzer aktivierbaren Link oder den zweiten virtuellen Realitätsraum anzeigt; Text, der den von einem Benutzer aktivierbaren Link oder den zweiten virtuellen Realitätsraum anzeigt;
ein Bild von mindestens einem Teil des zweiten virtuellen Realitätsraums oder
ein Fenster in der virtuellen Realitätsansicht des ersten virtuellen Realitätsraums, wobei die durch das Fenster bereitgestellte Ansicht ein Bild von mindestens einem Teil des zweiten virtuellen Realitätsraums umfasst.

3. Vorrichtung nach einem der vorhergehenden Ansprüche, wobei die virtuelle Realitätsführungsgrafik ein Bild von einem oder mehrerem von Folgendem umfasst; einer zylindrischen Projektion von mindestens einem Teil des zweiten virtuellen Realitätsraums;
einer kugelförmigen Projektion von mindestens einem Teil des zweiten virtuellen Realitätsraums;
einer Repräsentation des virtuellen Realitätsraums, wie von einem aktuellen Standort des ersten Benutzers im zweiten virtuellen Realitätsraum gesehen;
einer Repräsentation des zweiten virtuellen Realitätsraums, wie zu einer aktuellen Zeit im zweiten virtuellen Realitätsraum gesehen;
einem Panorama von mindestens einem Teil des zweiten virtuellen Realitätsraums;
mindestens einem 180°-Panorama des zweiten virtuellen Realitätsraums und
einem im Wesentlichen 360°-Panorama des zweiten virtuellen Realitätsraums.

4. Vorrichtung nach einem der vorhergehenden Ansprüche, wobei die virtuelle Realitätsführungsgrafik (408, 700) ein sich bewegendes Bild umfasst, das dazu ausgelegt ist, über die Zeit verschiedene Teile des zweiten virtuellen Realitätsraums zu zeigen.

5. Vorrichtung nach einem der vorhergehenden Ansprüche, wobei auf Basis der virtuellen Realitätsansicht des zweiten Benutzers ein Zeigerindikator (704) bereitgestellt ist, wobei der Zeigerindikator dazu ausgelegt ist, den zweiten Benutzer in die virtuelle Richtung der Führungsgrafik zu leiten, wodurch es dem zweiten Benutzer ermöglicht wird, die Führungsgrafik im virtuellen Realitätsraum zu lokalisieren.

6. Vorrichtung nach einem der vorhergehenden Ansprüche, wobei eine virtuelle Realitätszeigergrafik (704) zur Anzeige bereitgestellt ist, wobei sich die Zeigergrafik in einer beabstandeten virtuellen Position von der Führungsgrafik im ersten virtuellen Realitätsraum befindet und zur Führungsgrafik zeigt, um den zweiten Benutzer zur Führungsgrafik in seiner virtuellen Realitätsansicht zu führen.

7. Vorrichtung nach einem der vorhergehenden Ansprüche, wobei die Bereitstellung der Führungsgrafik davon abhängig ist, dass der erste Benutzer (301) und der zweite Benutzer (302) mindestens anfänglich denselben virtuellen Realitätsraum in ihrer jeweiligen virtuellen Realitätsansicht ansehen.

8. Vorrichtung nach einem der vorhergehenden Ansprüche, wobei die Anzeige der Führungsgrafik (408, 700) für den zweiten Benutzer entfernt wird, falls der erste Benutzer zum Ansehen des ersten virtuellen Realitätsraums zurückkehrt.

9. Vorrichtung nach einem der vorhergehenden Ansprüche, wobei die Bereitstellung der Führungsgrafik (408, 700) davon abhängig ist, dass sich der erste Benutzer und der zweite Benutzer jeweils einen des ersten virtuellen Realitätsraums oder des zweiten virtuellen Realitätsraums zur selben Zeit ansehen.

10. Vorrichtung nach einem der vorhergehenden Ansprüche, wobei die Vorrichtung die Anzeige einer zweiten virtuellen Realitätsführungsgrafik für den ersten Benutzer bereitstellt, wobei die zweite virtuelle Realitätsführungsgrafik ein Bild umfasst, das für den oder einen anderen von einem Benutzer aktivierbaren Link, der vom zweiten Benutzer aktiviert wird, repräsentiert.

11. Vorrichtung nach einem der vorhergehenden Ansprüche, wobei auf Basis eines dritten virtuellen Realitätsraums (306), wobei mindestens ein zweiter von einem Benutzer aktivierbarer Link (407) im zweiten virtuellen Realitätsraum (305) bereitgestellt ist, um es einem Benutzer zu ermöglichen, von der Präsentation des zweiten virtuellen Realitätsraums (305) zur Präsentation des dritten virtuellen Realitätsraums (306) in seiner virtuellen Realitätsansicht überzugehen, wobei der erste Benutzer den zweiten von einem Benutzer aktivierbaren Link aktiviert hat;
Bereitstellen der virtuellen Realitätsführungsgrafik zur Anzeige nur im ersten virtuellen Realitätsraum und Bereitstellen einer dritten virtuellen Realitätsführungsgrafik zur Anzeige nur im zweiten virtuellen Realitätsraum für den zweiten Benutzer in dessen Ansicht des ersten bzw. des zweiten virtuellen Realitätsraums,
wobei die zweite virtuelle Realitätsführungsgrafik ein Bild umfasst, das für den zweiten von einem Benutzer aktivierbaren Link repräsentativ ist, wodurch die Führungsgrafik und die dritte virtuelle Realitätsführungsgrafik einen Pfad durch den ersten, den zweiten und den dritten virtuellen Realitätsraum zu dem virtuellen Realitätsraum, der aktuell vom ersten Benutzer angesehen wird, bereitstellt.

12. Vorrichtung nach einem der vorhergehenden Ansprüche, wobei die eine oder die mehreren Führungsgrafiken von einem Benutzer aktivierbar sind, derart, dass bei Aktivierung der jeweiligen Führungsgrafik der erste oder der zweite Benutzer, der die Führungsgrafik aktiviert, dem anderen des ersten und des zweiten Benutzers in den virtuellen Realitätsraum folgt, der durch die Führungsgrafik repräsentiert ist, indem ihm der virtuelle Realitätsraum in seiner virtuellen Realitätsansicht präsentiert wird.

13. Verfahren, wobei das Verfahren Folgendes umfasst mit Bezug auf einen ersten virtuellen Realitätsraum (304) und einen zweiten, anderen virtuellen Realitätsraum (305), wobei im ersten virtuellen Realitätsraum mindestens ein von einem Benutzer aktivierbarer Link (307) bereitgestellt ist, um es einem Benutzer zu ermöglichen, von der Präsentation des ersten virtuellen Realitätsraums (304) zur Präsentation des zweiten virtuellen Realitätsraums in seiner virtuellen Realitätsansicht überzugehen, wenn ein erster Benutzer (301) den von einem Benutzer aktivierbaren Link aktiviert hat, um zur Präsentation des zweiten virtuellen Realitätsraums (305) überzugehen, Bereitstellen einer virtuellen Realitätsführungsgrafik (408, 700) zum Anzeigen für einen zweiten Benutzer (302) in seiner virtuellen Realitätsansicht des ersten virtuellen Realitätsraums (304), wobei die virtuelle Realitätsführungsgrafik ein Bild umfasst, das mit dem von einem Benutzer aktivierbaren Link verknüpft ist, wodurch dem zweiten Benutzer ein virtueller Pfad gezeigt wird, der vom ersten Benutzer (301) zwischen dem ersten und dem zweiten virtuellen Realitätsraum genommen wurde, wobei die Führungsgrafik mittels einer Präsentation von einem oder mehrerem von Text, einem vorbestimmten Namen, einem Benutzernamen, einem Abbild des ersten Benutzers, einer Farbe und einer Form, die mit dem ersten Benutzer verknüpft sind, um ihn für den zweiten Benutzer zu identifizieren (701), den ersten Benutzer als denjenigen identifiziert, der den von einem Benutzer aktivierbaren Link aktiviert hat, wobei die virtuelle Realitätsführungsgrafik (408, 700) mit dem von einem Benutzer aktivierbaren Link (307) verknüpft ist, indem sie eines oder mehreres von Folgendem umfasst;
Positionierung ihres virtuellen Standorts im ersten virtuellen Realitätsraum an dem im Wesentlichen selben Punkt wie der aktivierte von einem Benutzer aktivierbare Link;
Positionierung ihres virtuellen Standorts im ersten virtuellen Realitätsraum an dem im Wesentlichen selben Punkt, an dem der erste Benutzer den von einem Benutzer aktivierbaren Link aktiviert hat.

14. Computerlesbares Medium, das einen darauf gespeicherten Computerprogrammcode umfasst, wobei das computerlesbare Medium und der Computerprogrammcode dazu ausgelegt sind, wenn sie auf mindestens einem Prozessor ausgeführt werden, mindestens Folgendes durchzuführen:
mit Bezug auf einen ersten virtuellen Realitätsraum (304) und einen zweiten, anderen virtuellen Realitätsraum (305), wobei im ersten virtuellen Realitätsraum (304) mindestens ein von einem Benutzer aktivierbarer Link (307) bereitgestellt ist, um es einem Benutzer zu ermöglichen, von der Präsentation des ersten virtuellen Realitätsraums zur Präsentation des zweiten virtuellen Realitätsraums in seiner virtuellen Realitätsansicht überzugehen, wenn ein erster Benutzer (301) den von einem Benutzer aktivierbaren Link aktiviert hat, um zur Präsentation des zweiten virtuellen Realitätsraums (305) überzugehen, Bereitstellen einer virtuellen Realitätsführungsgrafik (408, 700) zum Anzeigen für einen zweiten Benutzer (302) in seiner virtuellen Realitätsansicht des ersten virtuellen Realitätsraums, wobei die virtuelle Realitätsführungsgrafik ein Bild umfasst, das mit dem von einem Benutzer aktivierbaren Link verknüpft ist, wodurch dem zweiten Benutzer ein virtueller Pfad gezeigt wird, der vom ersten Benutzer (301) zwischen dem ersten und dem zweiten virtuellen Realitätsraum genommen wurde, wobei die Führungsgrafik mittels einer Präsentation von einem oder mehrerem von Text, einem vorbestimmten Namen, einem Benutzernamen, einem Abbild des ersten Benutzers, einer Farbe und einer Form, die mit dem ersten Benutzer verknüpft sind, um ihn für den zweiten Benutzer zu identifizieren (701), den ersten Benutzer als denjenigen identifiziert, der den von einem Benutzer aktivierbaren Link aktiviert hat, wobei die virtuelle Realitätsführungsgrafik (408, 700) mit dem von einem Benutzer aktivierbaren Link (307) verknüpft ist, indem sie eines oder mehreres von Folgendem umfasst;
Positionierung ihres virtuellen Standorts im ersten virtuellen Realitätsraum an dem im Wesentlichen selben Punkt wie der aktivierte von einem Benutzer aktivierbare Link;
Positionierung ihres virtuellen Standorts im ersten virtuellen Realitätsraum an dem im Wesentlichen selben Punkt, an dem der erste Benutzer den von einem Benutzer aktivierbaren Link aktiviert hat.

## Revendications

1. Appareil comprenant :
au moins un processeur ; et
au moins une mémoire comprenant un code de programme d'ordinateur,
l'au moins une mémoire et le code de programme d'ordinateur étant configurés pour, avec l'au moins un processeur, amener l'appareil à effectuer au moins ce qui suit :
en ce qui concerne un premier espace de réalité virtuelle (304) et un deuxième espace de réalité virtuelle différent (305) où au moins une liaison pouvant être activée par l'utilisateur (307) est fournie dans le premier espace de réalité virtuelle pour permettre à un utilisateur de basculer d'une situation où il se voit présenter le premier espace de réalité virtuelle (304) à une situation où il se voit présenter le deuxième espace de réalité virtuelle (305) dans leur vue de réalité virtuelle, lorsqu'un premier utilisateur (301) a activé ladite liaison pouvant être activée par l'utilisateur pour basculer vers la situation où il se voit présenter le deuxième espace de réalité virtuelle (305), la fourniture de l'affichage d'un graphique de guidage de réalité virtuelle (408, 700) à un deuxième utilisateur (302) dans leur vue de réalité virtuelle du premier espace de réalité virtuelle (304), le graphique de guidage de réalité virtuelle comprenant une image associée à ladite liaison pouvant être activée par l'utilisateur, montrant ainsi au deuxième utilisateur un chemin virtuel emprunté par le premier utilisateur (301) entre les premier et deuxième espaces de réalité virtuelle, dans lequel le graphique de guidage identifie le premier utilisateur comme ayant activé ladite liaison pouvant être activée par l'utilisateur par présentation d'un ou de plusieurs éléments parmi un texte, un nom prédéterminé, un nom d'utilisateur, une image du premier utilisateur, une couleur et une forme associée au premier utilisateur pour les identifier (701) auprès du deuxième utilisateur ; et
dans lequel le graphique de guidage de réalité virtuelle (408, 700) est associé à la liaison pouvant être activée par l'utilisateur (307) par l'un ou plusieurs parmi :
le positionnement de son emplacement virtuel dans le premier espace de réalité virtuelle sensiblement au même point que la liaison pouvant être activée par l'utilisateur activée;
le positionnement de son emplacement virtuel dans le premier espace de réalité virtuelle sensiblement au même point que ladite liaison pouvant être activée par l'utilisateur activée par le premier utilisateur.

2. Appareil selon la revendication 1, dans lequel le graphique de guidage de réalité virtuelle (408, 700) est associé à la liaison pouvant être activée par l'utilisateur en comprenant l'un ou plusieurs parmi :
une icône indiquant ladite liaison pouvant être activée par l'utilisateur ou ledit deuxième espace de réalité virtuelle;
un texte indiquant ladite liaison pouvant être activée par l'utilisateur ou ledit deuxième espace de réalité virtuelle;
une image d'au moins une partie du deuxième espace de réalité virtuelle ; ou
une fenêtre dans la vue de réalité virtuelle du premier espace de réalité virtuelle, la vue fournie par la fenêtre comprenant une image d'au moins une partie du deuxième espace de réalité virtuelle.

3. Appareil selon l'une quelconque des revendications précédentes, dans lequel le graphique de guidage de réalité virtuelle comprend une image d'un ou de plusieurs des éléments suivants :
une projection cylindrique d'au moins une partie du deuxième espace de réalité virtuelle;
une projection sphérique d'au moins une partie du deuxième espace de réalité virtuelle;
une représentation de l'espace de réalité virtuelle vu depuis un emplacement actuel du premier utilisateur dans le deuxième espace de réalité virtuelle;
une représentation du deuxième espace de réalité virtuelle vu à un moment présent dans le deuxième espace de réalité virtuelle;
un panorama d'au moins une partie du deuxième espace de réalité virtuelle;
au moins un panorama à 180° du deuxième espace de réalité virtuelle ; et
un panorama à sensiblement 360° du deuxième espace de réalité virtuelle.

4. Appareil selon l'une quelconque des revendications précédentes, dans lequel le graphique de guidage de réalité virtuelle (408, 700) comprend une image en mouvement configurée pour montrer différentes parties du deuxième espace de réalité virtuelle dans le temps.

5. Appareil selon l'une quelconque des revendications précédentes, dans lequel un indicateur de pointeur (704) est fourni sur la base de la vue de réalité virtuelle du deuxième utilisateur, l'indicateur de pointeur étant configuré pour diriger le deuxième utilisateur dans la direction virtuelle du graphique guidage, permettant ainsi au deuxième utilisateur de localiser le graphique de guidage dans l'espace de réalité virtuelle.

6. Appareil selon l'une quelconque des revendications précédentes, dans lequel un graphique de pointeur de réalité virtuelle (704) est fourni pour l'affichage, le graphique de pointeur étant situé dans une position virtuelle espacée du graphique de guidage dans le premier espace de réalité virtuelle, et pointant vers le graphique de guidage pour guider le deuxième utilisateur vers le graphique de guidage dans leur vue de réalité virtuelle.

7. Appareil selon l'une quelconque des revendications précédentes, dans lequel la fourniture du graphique de guidage dépend du premier utilisateur (301) et du deuxième utilisateur (302) visualisant simultanément, au moins au départ, le même espace de réalité virtuelle dans leurs vues de réalité virtuelle respectives.

8. Appareil selon l'une quelconque des revendications précédentes, dans lequel l'affichage du graphique de guidage (408, 700) pour le deuxième utilisateur est supprimé si le premier utilisateur revient à visualiser le premier espace de réalité virtuelle.

9. Appareil selon l'une quelconque des revendications précédentes, dans lequel la fourniture du graphique de guidage (408, 700) dépend du premier utilisateur et du deuxième utilisateur visionnant chacun simultanément le premier espace de réalité virtuelle ou le deuxième espace de réalité virtuelle.

10. Appareil selon l'une quelconque des revendications précédentes, dans lequel l'appareil permet l'affichage d'un deuxième graphique de guidage de réalité virtuelle pour le premier utilisateur, le deuxième graphique de guidage de réalité virtuelle comprenant une image représentant la liaison ou une autre liaison pouvant être activée par l'utilisateur activée par le deuxième utilisateur.

11. Appareil selon l'une quelconque des revendications précédentes, dans lequel sur la base d'un troisième espace de réalité virtuelle (306) où au moins une deuxième liaison pouvant être activée par l'utilisateur (407) est fournie dans le deuxième espace de réalité virtuelle (305) pour permettre à un utilisateur de passer de la situation de se voir présenter le deuxième espace de réalité virtuelle (305) à la situation de se voir présenter le troisième espace de réalité virtuelle (306) dans leur vue de réalité virtuelle, le premier utilisateur ayant activé ladite deuxième liaison pouvant être activée par l'utilisateur ;
fournir l'affichage du graphique de guidage de réalité virtuelle uniquement dans le premier espace de réalité virtuelle ; et
fournir l'affichage d'un troisième graphique de guidage de réalité virtuelle uniquement dans le deuxième espace de réalité virtuelle pour le deuxième utilisateur dans leur vue des premier et deuxième espaces de réalité virtuelle, respectivement,
le deuxième graphique de guidage de réalité virtuelle comprenant une image représentant la deuxième liaison pouvant être activée par l'utilisateur, ledit graphique de guidage et ledit troisième graphique de guidage de réalité virtuelle fournissant ainsi un chemin virtuel traversant les premier, deuxième et troisième espaces de réalité virtuelle vers l'espace de réalité virtuelle actuellement visualisé par le premier utilisateur.

12. Appareil selon l'une quelconque des revendications précédentes, dans lequel le ou les graphiques de guidage peuvent être activés par l'utilisateur de sorte que lors de l'activation du graphique de guidage respectif, le premier ou le deuxième utilisateur activant le graphique de guidage suit l'autre du premier et du deuxième utilisateur dans l'espace de réalité virtuelle que le graphique de guidage représente en se voyant présenter eux-mêmes ledit espace de réalité virtuelle dans leur vue de réalité virtuelle.

13. Procédé, le procédé comprenant :
en ce qui concerne un premier espace de réalité virtuelle (304) et un deuxième espace de réalité virtuelle différent (305), où au moins une liaison pouvant être activée par l'utilisateur (307) est fournie dans le premier espace de réalité virtuelle pour permettre à un utilisateur de basculer d'une situation où il se voit présenter le premier espace de réalité virtuelle (304) à une situation où il se voit présenter le deuxième espace de réalité virtuelle dans leur vue de réalité virtuelle, lorsqu'un premier utilisateur (301) a activé ladite liaison pouvant être activée par l'utilisateur pour basculer vers la situation où il se voit présenter le deuxième espace de réalité virtuelle (305), la fourniture de l'affichage d'un graphique de guidage de réalité virtuelle (408, 700) à un deuxième utilisateur (302) dans leur vue de réalité virtuelle du premier espace de réalité virtuelle (304), le graphique de guidage de réalité virtuelle comprenant une image associée à ladite liaison pouvant être activée par l'utilisateur, montrant ainsi au deuxième utilisateur un chemin virtuel emprunté par le premier utilisateur (301) entre les premier et deuxième espaces de réalité virtuelle, dans lequel le graphique de guidage identifie le premier utilisateur comme ayant activé ladite liaison pouvant être activée par l'utilisateur par présentation d'un ou de plusieurs éléments parmi un texte, un nom prédéterminé, un nom d'utilisateur, une image du premier utilisateur, une couleur et une forme associée au premier utilisateur pour les identifier (701) auprès du deuxième utilisateur, dans lequel le graphique de guidage de réalité virtuelle (408, 700) est associé à la liaison pouvant être activée par l'utilisateur (307) par l'un ou plusieurs des éléments suivants :
le positionnement de son emplacement virtuel dans le premier espace de réalité virtuelle sensiblement au même point que la liaison pouvant être activée par l'utilisateur activée;
le positionnement de son emplacement virtuel dans le premier espace de réalité virtuelle sensiblement au même point que ladite liaison pouvant être activée par l'utilisateur activée par le premier utilisateur.

14. Support lisible par ordinateur comprenant un code de programme d'ordinateur stocké sur celui-ci, le support lisible par ordinateur et le code de programme d'ordinateur étant configurés pour, lorsqu'ils sont exécutés sur au moins un processeur, effectuer au moins ce qui suit :
en ce qui concerne un premier espace de réalité virtuelle (304) et un deuxième espace de réalité virtuelle différent (305) où au moins une liaison pouvant être activée par l'utilisateur (307) est fournie dans le premier espace de réalité virtuelle (304) pour permettre à un utilisateur de basculer d'une situation où il se voit présenter le premier espace de réalité virtuelle à une situation où il se voit présenter le deuxième espace de réalité virtuelle dans leur vue de réalité virtuelle, lorsqu'un premier utilisateur (301) a activé ladite liaison pouvant être activée par l'utilisateur pour basculer vers la situation où il se voit présenter le deuxième espace de réalité virtuelle (305), la fourniture de l'affichage d'un graphique de guidage de réalité virtuelle (408, 700) à un deuxième utilisateur (302) dans leur vue de réalité virtuelle du premier espace de réalité virtuelle, le graphique de guidage de réalité virtuelle comprenant une image associée à ladite liaison pouvant être activée par l'utilisateur, montrant ainsi au deuxième utilisateur un chemin virtuel emprunté par le premier utilisateur (301) entre les premier et deuxième espaces de réalité virtuelle, dans lequel le graphique de guidage identifie le premier utilisateur comme ayant activé ladite liaison pouvant être activée par l'utilisateur par présentation d'un ou de plusieurs éléments parmi un texte, un nom prédéterminé, un nom d'utilisateur, une image du premier utilisateur, une couleur et une forme associée au premier utilisateur pour les identifier (701) auprès du deuxième utilisateur, dans lequel le graphique de guidage de réalité virtuelle (408, 700) est associé à la liaison pouvant être activée par l'utilisateur (307) par l'un ou plusieurs des éléments suivants :
le positionnement de son emplacement virtuel dans le premier espace de réalité virtuelle sensiblement au même point que la liaison pouvant être activée par l'utilisateur activée;
le positionnement de son emplacement virtuel dans le premier espace de réalité virtuelle sensiblement au même point que ladite liaison pouvant être activée par l'utilisateur activée par le premier utilisateur.
